Europäisches Patentamt

European Patent Office

Office européen des brevets

(11) Publication number: **0 351 992**
**A2**

(12) ## EUROPEAN PATENT APPLICATION

(21) Application number: **89306933.6**

(22) Date of filing: **07.07.89**

(51) Int. Cl.⁴: **H01H 13/70**

(30) Priority: **21.07.88 JP 95641/88**

(43) Date of publication of application:
**24.01.90 Bulletin 90/04**

(84) Designated Contracting States:
**DE FR GB SE**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Koike, Noboru c/o Intellectual**
**Property Division**
**Toshiba Corporation 1-1-1, Shibaura**
**Minato-ku Tokyo(JP)**

(74) Representative: **BATCHELLOR, KIRK & EYLES**
**2 Pear Tree Court Farringdon Road**
**London.EC1R 0DS(GB)**

(54) **Improvements in key switches.**

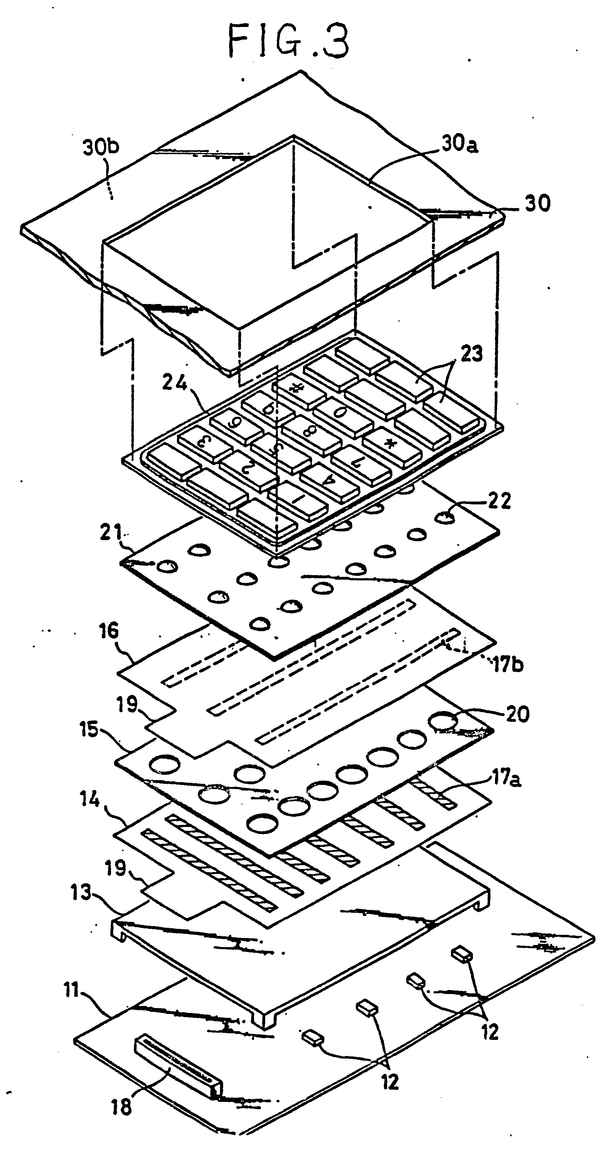

(57) A key switch assembly for use in an electronic apparatus is mounted in a casing of the apparatus and capable of illumination as shown in Figure 3. The key switch assembly comprises a plurality of switches (17a, 20, 17b) and a key pad 24 having a plurality of keys 23 mounted thereon for activating the switches. The switches and the key pad are constructed of a light transmitting material. The key pad is positioned within the casing 30 so that a portion of the key pad containing the keys extends through an opening 30a in the casing 30, and a second portion of the key pad surrounding the keys is secured to the opposing surface of the casing at the edge portions adjacent the opening.

FIG.3

EP 0 351 992 A2

## IMPROVEMENTS IN KEY SWITCHES

This invention relates generally to key switches, and more particularly to a key switch for an electronic apparatus, such as a mobile radio apparatus.

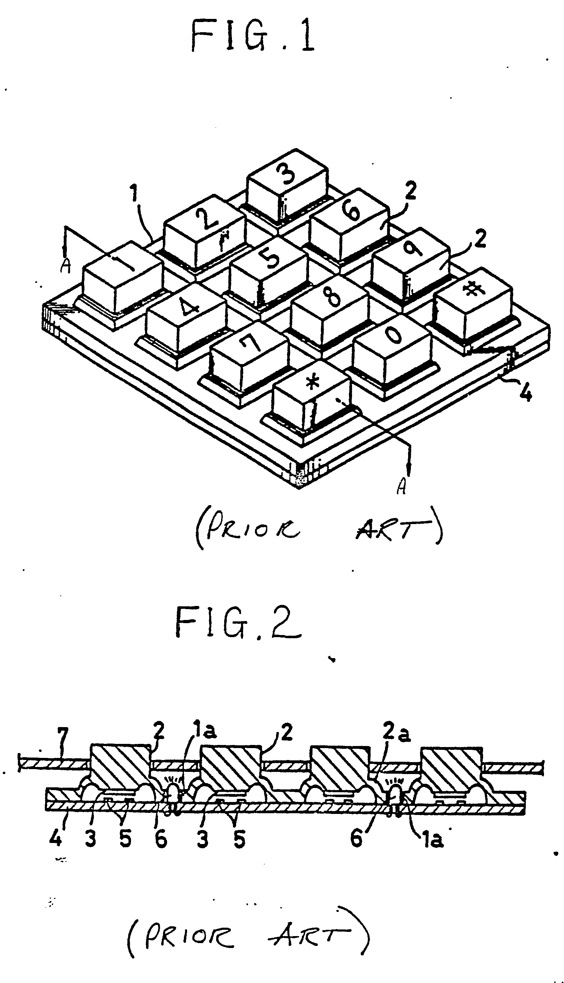

Generally, where a key switch is used as part of an operational panel of a mobile radio apparatus, it is desirable to illuminate the key pad so that the apparatus can be easily operated in darkness or in poor ambient lighting conditions. Figure 1 is a perspective view of an illuminated key switch of the type known in the prior art, and Figure 2 is a cross-sectional view of the key switch of Figure 1 taken along line A-A.

As shown in Figures 1 and 2, an electronic apparatus comprises a casing 7 and a substrate 4 fixedly coupled to casing 7 at side portions thereof (not shown). A key switch is mounted on substrate 4 and comprises a key pad 1. Key pad 1 is constructed of silicon rubber, and comprises a number of keys 2 positioned in through holes formed in casing 7. Keys 2 are moveable and travel downwardly in response to a downward pushing force applied by an operator and upwardly when the deflecting force is removed. A contact member 3 is provided on the bottom surface of each of keys 2 to be moveable therewith, and a pair of terminals 5 are fixedly disposed on substrate 4 in spaced relationship at a location corresponding to contact member 3. In operation, when key 2 is depressed, portion 2a of key 2 is deformed, and contact member 3 engages terminals 5 so that the terminals are connected, through the contact member, to close an electrical circuit.

A plurality of light emitting diodes (LEDs) 6 are mounted on substrate 4 and are positioned to penetrate through holes 1a provided in key pad 1 to illuminate keys 2.

Because mobile radio equipment is frequently used outdoors, the operational panel will be exposed to dust, dirt and various weather conditions, including rain. In a conventional switch such as shown in Figures 1 and 2, gaps are formed between keys 2 and casing 7 which may permit the entry of foreign particles and water into the interior space of the apparatus. Once admitted, the foreign particles and water may then travel further toward substrate 4 through gaps formed around LEDs 6. This intrusion may cause the equipment to short circuit or it may result in faulty operation.

It is an object of the present invention to provide a key switch suitable for outdoor use.

It is another object of the present invention to provide a key switch with improved resistance to entry of foreign particles into the interior of the apparatus.

A key switch in accordance with the present invention comprises a key pad and a plurality of switches constructed of a light transmitting material. The key pad comprises a number of keys which are positioned on the upper surface of the key pad and a plurality of LEDs are disposed below the key pad for illuminating the keys. The portion of the key pad containing the keys is positioned in an opening formed in the casing of an electronic apparatus, and the surface portion of the key pad surrounding the keys in fixedly attached to an opposing surface of the casing adjacent the edge portions of the opening. This arrangement effectively seals the key pad and casing so that the entry of foreign particles and water into the apparatus is prevented.

In that order the invention may be illustrated and readily carried into effect, non-limiting embodiments thereof will now be described by way of example only and with reference to the accompanying drawings, wherein:

Figure 1 is a perspective view of a known key switch,

Figure 2 is a cross-sectional view of the key switch shown in Figure 1 taken along line A-A,

Figure 3 is an exploded perspective view of a key switch according to an embodiment of the present invention,

Figure 4 is a perspective view of the key switch shown in Figure 3, and

Figure 5 is a cross-sectional view of the key switch shown in Figure 4 taken along line B-B.

A preferred embodiment of a key switch assembly in accordance with the present invention is shown in Figures 3, 4 and 5.

Referring to Figure 3, a key switch comprises a substrate 11, light emitting diodes (LEDs) 12 disposed on substrate 11, and a reinforcement substrate 13. Reinforcement substrate 13 is constructed of a light transmitting material (for example, acrylate, polycarbonate, glass epoxy resin, etc.) and is disposed above LEDs 12. A first electrode sheet 14 is disposed on reinforcement substrate 13 and is separated from a second electrode sheet 16 by a spacer sheet 15. In the preferred embodiment, electrode sheets 14 and 16 are both constructed of a light transmitting material, such as polyester film.

A plurality of line electrodes 17a and 17b, constructed of a light-transmitting material, e.g., indium oxide, are printed on the opposing surfaces of first and second electrode sheets 14 and 16, respectively. Line electrodes 17a are printed on sheet 14 in parallel relationship, and line electrodes 17b are printed in parallel on sheet 16 and are arranged in a direction perpendicular to the direction of line electrodes 17a. Connection terminals 19 are provided on sheets 14 and 16 and are electrically connected through a connector 18 provided on substrate 11.

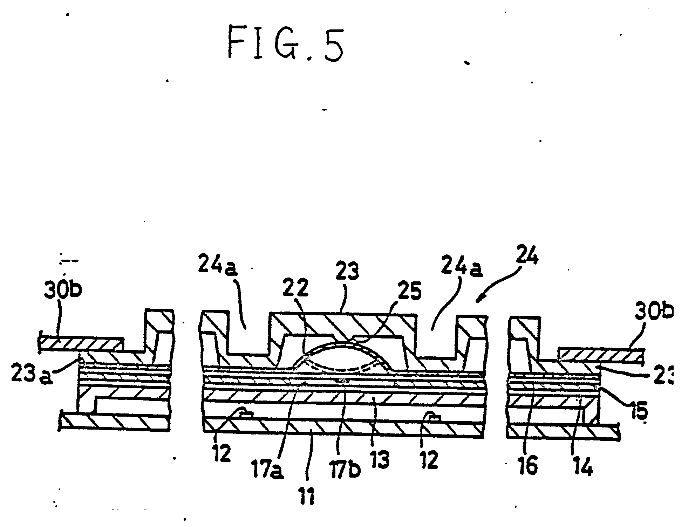

Spacer sheet 15 is constructed of a light transmitting resin sheet, such as polyester, and comprises a plurality of openings 20 positioned to coincide with the intersections of line electrodes 17a and line electrodes 17b. A click substrate 21, constructed of polyester, is disposed on electrode sheet 16, and comprises a plurality of hemispherical projections 22 located at positions corresponding to openings 20 on spacer sheet 15. A key pad 24 is disposed above click substrate 21 and is constructed of semitransparent silicon rubber (-$(R_2Si_2)n$). Key pad 24 comprises a plurality of keys 23, integrally formed with the pad, moulded at locations corresponding to hemispherical projections 22. Referring to Figure 5, a projection 25 is provided on the undersurface of each of keys 23 opposite hemispherical portions 22 and contacts the top of the hemispherical portion.

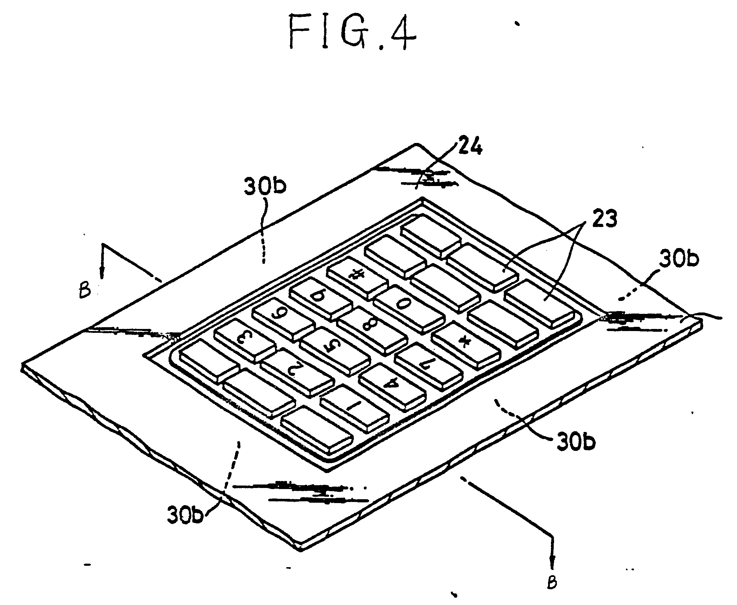

A casing 30 of the electronic apparatus includes an opening 30a. Key pad 24 is positioned within casing 30 so that a portion of the key pad, containing keys 23, extends through opening 30a. A portion 23a of key pad 24, extending around the periphery of the key pad and surrounding keys 23, is secured to the opposing surface of edge portion 30b of casing 30, so that the key pad is fixedly mounted in the casing as shown in Figure 4.

In operation, when a key 23 is depressed, hemispherical projection 22 is inverted, as shown in Figure 5 by a broken line. As a result, pressure is placed on second electrode sheet 16 so that it contacts first electrode sheet 14 through openings 20 in spacer sheet 15. An electrode 17b and an electrode 17a are then electrically connected to close a circuit between the electrodes.

In the preferred embodiment, LEDs 12 are provided to illuminate keys 23, and are positioned so that light travels through reinforcement substrate 13, first electrode sheet 14, spacer sheet 15, second electrode sheet 16, and click substrate 21, and is then radiated from the top surfaces of the keys. This allows an operator to operate the apparatus even in poor ambient lighting conditions. It should be noted that LEDs 12 are arranged on substrate 11 at locations corresponding to the valley portions 24a between adjacent keys 23 (Figure 5) so that the number of LEDs can be reduced.

In the preferred embodiment, because the bottom surface of edge portion 30b of casing 30 is secured to the top surface of surrounding portion 23a of key pad 24, the area between casing 30 and key pad 24 is effectively sealed so that the interior space of casing 30 is better protected from the outside elements. Accordingly, even if the apparatus is exposed, for example, to rain water or dust, the rain water and dust can be prevented from entering into the interior of the casing.

It should be noted that silicon rubber is oil-resistant, being unaffected by oil secretions from human fingers. Furthermore silicon rubber is also resistant to deformation even if exposed to extreme high or low temperature conditions. Although key pad 24 is made of silicon rubber in the described embodiment, the material of key pad 24 is not limited thereto, and key pad 24 may be constructed of other synthetic material, such as rubbers having similar oilproof and temperature resistant characteristics.

**Claims**

1. A key switch assembly for an electronic apparatus and mounted in a casing of the apparatus, the assembly comprising at least one switch and a key pad,
characterised in that the key pa d comprises at least one key movable in a downward direction responsive to a pushing force applied by an operator to change the state of the switch from a first state to a second state, wherein the key pad is positioned so a first surface portion of the key pad containing the key extends through an opening provided in the casing and a second surface portion of the key pad surrounding the first portion is secured to an edge portion of the casing adjacent the opening.

2. An assembly as claimed in claim 1, further comprising a substrate constructed of a light transmitting material for supporting said key pad and said switch.

3. An assembly as claimed in claim 1 or 2 further comprising lighting means disposed below said switch and said key pad for illuminating said key.

4. An assembly as claimed in any preceding claim, wherein said switch comprises at least two electrodes disposed in spaced relationship and positioned to come in contact responsive to depression of said key.

5. An assembly as claimed in claim 4 wherein said switch further comprises spacer means positioned between said electrodes, and having an opening provided at a location corresponding to the location of said key.

6. An assembly as claimed in claim 4 or 5 wherein said switch comprises elastic means disposed adjacent said key pad and having a generally hemispherical projection positioned at a location corresponding to the location of said key, said projection being inverted responsive to depression of said key to cause said electrodes to come into contact.

7. An electronic apparatus incorporated in a casing having an opening, at least one switch, and a key pad characterised in that the key pad has at least one key movable in a downward direction responsive to a pushing force applied by an operator to change the state of the switch from a first state to a second state, wherein the key pad is positioned so a first surface portion of the key pad containing the key extends through an opening provided in the casing and a second surface portion of the key pad surrounding the first portion is secured to an edge portion of the casing adjacent the opening, said key pad and said switch being constructed of a light transmitting material.

8. Apparatus as claimed in claim 7 further comprising a substrate for supporting said key pad and said switch.

9. Apparatus as claimed in claim 7 or 8 further comprising lighting means disposed below said key pad and said switch for illuminating said key.

10. A key switch assembly for an electronic apparatus and mounted in a casing of the apparatus characterised in that the assembly comprises:
a substrate,
a first electrode sheet disposed on said substrate and having a plurality of first electrodes,
a second electrode sheet disposed on said substrate and having a plurality of second electrodes,
a spacer sheet disposed between said first electrode sheet and said second electrode sheet and having a plurality of openings positioned to coincide with the intersections of said first electrodes and second electrodes,
a click substrate disposed on said second electrode sheet and having a plurality of elastic projections located at positions corresponding to said openings, said projections being deformable responsive to a deflecting force applied by an operator to cause said first electrodes to contact said second electrodes, and
a key pad, disposed on said click substrate and having a plurality of keys located at positions corresponding to said projections, each of said keys being movable in a downward direction responsive to a pushing force applied by an operator to cause said projection to be deformed, said key pad being positioned within the casing so a first surface portion of said key pad containing the keys extends through an opening provided in the casing and a second surface portion of said key pad surrounding said first portion is secured to an edge portion of said casing adjacent said opening.

11. The assembly of claim 10 further comprising lighting means disposed below said substrate for illuminating said key pad.

# FIG.1

(PRIOR ART)

# FIG.2

(PRIOR ART)

# FIG.3

# FIG.4

# FIG.5